# EUROPEAN PATENT SPECIFICATION

(11) **EP 2 123 481 B1**
(45) Date of publication and mention of the grant of the patent: **29.06.2011**
(21) Application number: 09159317.8
(22) Date of filing: 04.05.2009
(51) Int. Cl.: B60C 9/08

(54) **High twist polyester carcass ply for a pneumatic tire**
Hochverdrehte Polyesterkarkassenschicht für einen Luftreifen
Pli de carcasse en polyester haute torsion pour pneu

(30) Priority: 06.05.2008 US 115585
(43) Date of publication of application: 25.11.2009
(73) Proprietor: The Goodyear Tire & Rubber Company, Akron, OH 44316-0001 (US)
(72) Inventor: Donckels, Yves, B-5360, Natoye (BE); Imhoff, Serge Julien Auguste, L-9184, Schrondweiler (LU)
(74) Representative: Kutsch, Bernd

(56) References cited:
- EP-A- 1 745 945
- EP-A- 1 798 073
- EP-A- 1 867 495
- US-A- 3 977 172
- US-A- 6 026 879
- US-A1- 2006 180 261
- US-B1- 6 460 588
- US-B1- 6 634 399

## Description

### Field of the Invention

The present invention is directed to a polyester cord for use in a pneumatic tire and, more specifically, to a high twist polyester cord used in a carcass of a pneumatic runflat tire.

### Background of the Invention

The term "runflat", when applied to a pneumatic tire, means that the tire structure itself has sufficient strength to support a vehicle load when the pneumatic tire is operated in an uninflated condition. The sidewall and internal surfaces of the pneumatic tire do not collapse or buckle onto themselves as does a conventional uninflated pneumatic tire. Runflat design is typically directed toward providing rigid sidewalls, rather than internal supporting structures, to prevent the uninflated pneumatic tire from collapsing. Due to rubbers sensitivity to heat and the large amounts of rubber required to stiffen a sidewall member, heat build-up is a major factor in runflat tire failure. Design consideration is also directed to the strengthening of the crown region of the pneumatic tire, thereby enabling cooperation with the stiffened sidewall members and substantial improvement of runflat properties.

One conventional runflat tire has a low aspect ratio and employs sidewall inserts to improve stiffness.

Another conventional runflat tire includes a third ply and a third insert in the sidewall to further increase the runflat performance. This tire uses elastomeric covered composite ribs that, in combination with a radial ply, provide runflat capability in a wide range of tire applications.

Still another conventional tire has a shoulder insert, an apex envelope of a single ply, and a turnup extended to end directly under an edge of one belt reinforcement ply. This tire, though not a runflat tire, demonstrates that beneficial weight reductions may be achieved with a nominal loss of handling.

Yet another conventional runflat tire uses one ply and two inserts per sidewall to maintain runflat capability. This tire may thereby be produced with a light weight and few components.

In all these conventional runflat tires, heat build-up is a major factor contributing to runflat failure, especially when operated for prolonged periods at high speeds in an uninflated/underinflated condition. Extreme temperature conditions have deleterious effects on the components of the tire.

More recent conventional runflat tires use rayon as carcass reinforcement. However, an improvement of the interfacial strength of polyester cords in rubber, and more specifically such strength at elevated temperatures, may allow the use of lower cost polyester as carcass reinforcement, thereby providing a lower cost runflat tire with reduced rolling resistance as compared to a tire having higher cost rayon carcass reinforcement.

US-B1- 6,634,399 describes a tire with a poly-ethylene naphthalate reinforcement of the carcass comprising 2000-8000 dTex cords having a twist multiplier of 5-10 and a cord density of 20-40.

US-A- 3,977,172 describes a cord for use in rubber goods such as tires comprising twisted plies of poly(p-phenyleneterephthalamide) continuous filaments and nylon or polyester continuous filaments.

Document EP-A-1 745 945 discloses the features of the preamble of claim 1.

### Summary of the Invention

The invention relates to a pneumatic radial runflat tire according to claim 1. Dependent claims refer to preferred embodiments of the invention.

In accordance with one preferred aspect of the present invention, a pneumatic radial runflat tire comprises a pair of parallel annular beads, a carcass ply structure, a belt reinforcement structure, a tread, and a pair of sidewalls. The carcass ply structure comprises a polyester fabric with a cord construction of 2200 dtex/2 8.5/8.5 tpi with a cord density of between 16 and 28 epi. The belt reinforcement structure is disposed radially outward of the carcass ply structure in a crown area of the tire. The tread is disposed radially outward of the belt reinforcement structure. The pair of sidewalls comprises part of the carcass ply structure. The pair of sidewalls is disposed between the tread and the pair of parallel annular beads.

According to another preferred aspect of the present invention, cords of the polyester fabric are treated, after twist, with an aqueous emulsion comprising a polyepoxide and, subsequently, with an aqueous RFL emulsion.

According to another preferred aspect of the present invention, the aqueous RFL emulsion comprises a resorcinol-formaldehyde resin, a styrene-butadiene copolymer latex, a vinylpyridine-styrene-butadiene terpolymer latex, and a blocked isocyanate.

According to another preferred aspect of the present invention, yarn of the polyester fabric is top-coated with an adhesion activator prior to twisting the yarn into cord.

According to another preferred aspect of the present invention, in a first treatment step of the carcass ply structure, dry polyester cord is dipped in an aqueous polyepoxide dispersion.

According to another preferred aspect of the present invention, in a second treatment step of the carcass ply structure, polyepoxide treated polyester cord is dipped in an aqueous RFL emulsion.

According to another preferred aspect of the present invention, the carcass ply structure comprises a single polyester fabric ply or a first and a second polyester fabric ply.

According to another preferred aspect of the present invention, the tire further comprises a fabric overlay deployed between a bottom portion of the tread and an upper part of the belt reinforcement structure.

According to another preferred aspect of the present invention, the tire further comprises a gas-impervious inner liner, a pair of bead filler apexes, a first pair of sidewall wedge inserts, and a second pair of sidewall wedge inserts.

According to another preferred aspect of the present invention, the first wedge inserts are located between the inner liner and the first fabric and the second wedge inserts are located between the first fabric ply and the second ply.

According to another preferred aspect of the present invention, a fabric overlay is disposed radially inward of the tread and radially outward from the belt reinforcement structure.

According to another preferred aspect of the present invention, the fabric overlay comprises a helically wound ribbon laid at an inclination angle between zero and five degrees with respect to an equatorial plane of the pneumatic tire.

According to another preferred aspect of the present invention, the tire further includes chafers for protecting the carcass ply structure.

According to another preferred aspect of the present invention, the tire further includes sidewall stiffening devices of at least one insert placed in each sidewall.

Preferred sidewall stiffening devices include a fabric strip, a wavy cord, and/or a fiber.

### Definitions

"Axial" and "axially" means the lines or directions that are parallel to the axis of rotation of the tire.

"Belt Reinforcement Structure" or "Reinforcing Belts" means one or at least two annular layers or plies of parallel cords, woven or unwoven, underlying the tread, preferably unanchored to the bead, and preferably having both left and right cord angles in the range from 17 to 27 degrees with respect to the equatorial plane of the tire.

"Circumferential" means lines or directions extending along the perimeter of the surface of the annular tread perpendicular to the axial direction.

"Carcass" means the tire structure apart from the belt structure, tread, and undertread, but including the beads.

"Chafers" refers to narrow strips of material placed around the outside of the bead to protect cord plies from the rim, distribute flexing above the rim, and to seal the tire.

"Chipper" means a reinforcement structure located in the bead portion of the ti re.

"Cord" means one of the reinforcement strands the plies in the tire comprise.

"Equatorial Plane (EP)" means the plane perpendicular to the tire's axis of rotation and passing through the center of its tread.

"Flipper" means a reinforced fabric wrapped about the bead core.

"Innerliner" means the layer or layers of elastomer or other material that form the inside surface of a tubeless tire and that contain the inflating fluid within the tire.

"Ply" means a layer of rubber-coated parallel cords.

"Radial" and "radially" mean directions radially toward or away from the axis of rotation of the tire.

"Radial Ply Tire" means a belted or circumferentially-restricted pneumatic tire in which at least one ply has cords which extend from bead to bead are laid at cord angles between 65 and 90 degrees with respect to the equatorial plane of the tire. "Shoulder" means the upper portion of sidewall just below the tread edge. "Sidewall" means that portion of a tire between the tread and the bead.

### Brief Description of the Drawings

The following is a brief description of the drawings in which like parts bear like reference numerals and in which:
FIG. 1 is a cross-sectional view of an example tire for use with the present invention;
FIG. 2 is a cross-sectional view of another example tire for use with the present invention; and
FIG. 3 is a cross-sectional view of still another example tire for use with the present invention.

### Detailed Description of One Example of the Invention

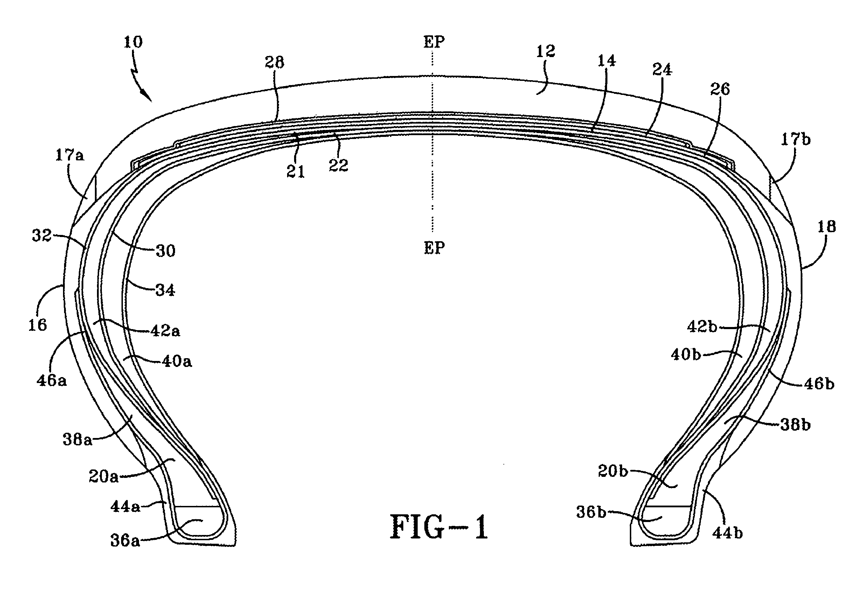

FIG. 1 illustrates a cross section of an example multiple-insert pneumatic radial runflat tire 10 for use with the present invention. The example tire 10 has a tread cap 12, a belt structure 14 comprising two belt layers 24, 26, a pair of sidewall portions 16, 18, a pair of transition regions 17a, 17b wherein the tread cap 12 smoothly transitions into each sidewall portion 16, 18, respectively, a pair of bead regions 20a, 20b, a carcass 21 with a ply structure 22, and a fabric overlay 28 deployed between the bottom portion of the tread cap 12 and the upper parts of the belt structure 14.

The ply structure 22 has a first fabric ply 30, a second fabric ply 32, a gas-impervious inner liner 34, a pair of beads 36a, 36b, a pair of bead filler apexes 38a, 38b, a first pair of sidewall wedge inserts 40a, 40b, and a second pair of sidewall wedge inserts 42a, 42b. The first or innermost wedge inserts 40a, 40b are located between the inner liner 34 and the first ply 30. The second wedge inserts 42a, 42b are located between the first ply 30 and the second ply 32.

The fabric overlay 28 is disposed beneath, or radially inward of, the tread cap 12 and on top of, or radially outward from, belt structure 14. The fabric overlay 28 may be reinforced with the polyester cords. The fabric overlay 28 may consist of a helically wound ribbon which is laid at an inclination angle between zero and five degrees with respect to the equatorial plane EP of the example tire 10. The innermost first ply 30 wraps around the beads 36a, 36b and has turnup ends 46a, 46b that extend radially outward into the sidewall portions 16, 18, respectively.

The reinforced sidewall portions 16, 18 include chafers 44a, 44b that protect the underlying ply structure 22 of the carcass 21 from abrasion against a wheel rim (not shown). The sidewall portions of the ply structure 22 give the example tire 10 a limited runflat capability. The structural reinforcement in the sidewall area of the example tire 10 increases the overall thickness of the sidewall portions 16, 18, particularly where the wedge inserts 40a, 40b, 42a, 42b are thickest.

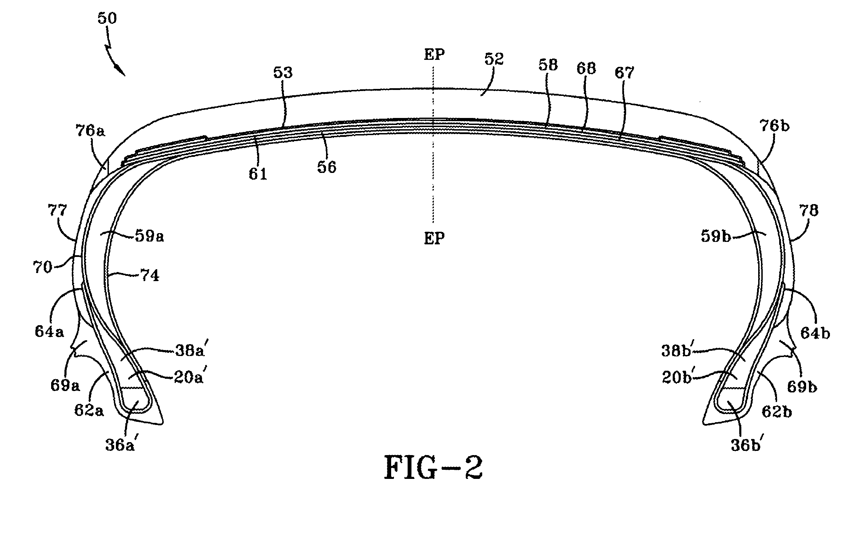

FIG. 2 illustrates a cross-section of an example single-insert pneumatic radial runflat tire 50 for use with the present invention. The example tire 50 differs from the example multiple-insert tire 10 of FIG. 1 in several ways. The example tire 50 has a single wedge insert 59a, 59b in each sidewall 77, 78, respectively. The ply structure 56 may consist of a single fabric ply 70.

The example tire 50 has a tread cap 52, a pair of sidewall portions 77, 78, a pair of transition regions 76a, 76b wherein the tread cap 52 smoothly transitions into each sidewall portion 77, 78, respectively, a pair of bead regions 20a', 20b', a belt structure 58 comprising two belts 67, 68, and a fabric overlay 53 deployed between the bottom, radially inward, portion of tread cap 52 and the upper, radially outward portion of the belt structure 58. A carcass 61 comprises the ply structure 56 having the single ply 70, a gas-impervious inner liner 74, a pair of beads 36a', 36b', and a pair of bead filler apexes 38a', 38b'. The single wedge insert 59a, 59b in each sidewall portion 77, 78, respectively, is located between the inner liner 74 and the single carcass ply 70. The single carcass ply 70 has turnup ends 64a, 64b that extend into each sidewall portion 77, 78, respectively. The reinforced sidewall portions 77, 78 include chafers 62a, 62b and rim flange protectors 69a, 69b (also known as wheel-rim retainer lips). The rim flange protectors 69a, 69b maintain the tire upon a wheel rim (not shown) during runflat operation, while the chafers 62a, 62b protect the underlying ply structure 56 from abrasion against the wheel rim. The sidewall portions of the ply structure 56 give the example tire 50 a limited runflat capability. The structural reinforcement in the sidewall area of the example tire 50 substantially increases the overall thickness of the sidewall portions 77, 78, particularly in the transition regions 76a, 76b.

The example runflat tire designs 10, 50 illustrate the thickened sidewall portions that are necessary to support the tire's load with limited sidewall deflection when the example runflat tire 10, 50 is operated in an uninflated state. Such runflat tire designs typically provide good vehicle handling and performance under conditions of full inflation, and yield acceptable runflat vehicle handling and runflat operational life when uninflated.

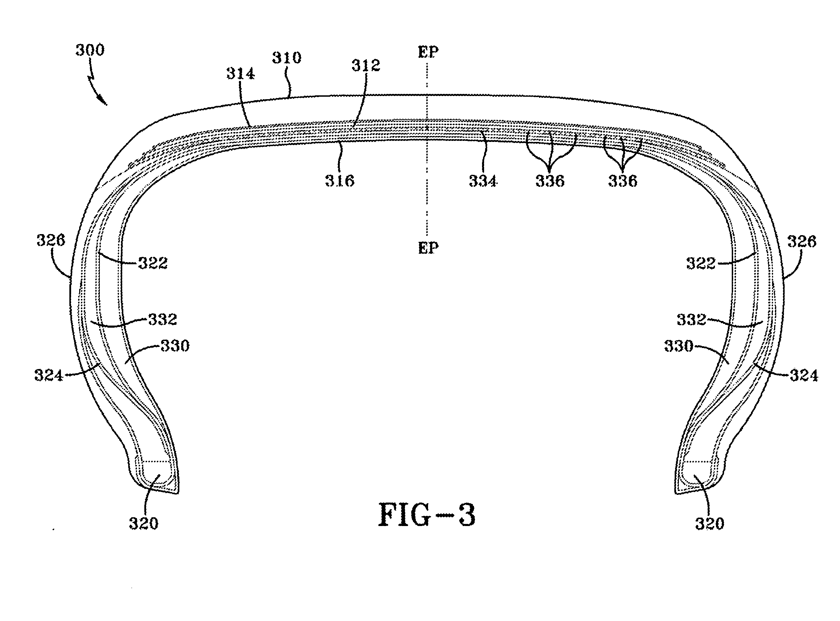

FIG. 3 illustrates a cross section of another example pneumatic runflat tire 300 for use with the present invention. The example tire 300 has a tread 310, a belt structure 312 comprising one or more belts, a fabric overlay 314 over the belts, a fabric underlay 334 under the belts, and a radially reinforced carcass 316 under the fabric underlay. The fabric underlay 334, between the belts and the carcass 316 stiffens the tread 310 by widening the gap between the belts and carcass. The fabric underlay 334 is reinforced by cords wound at an angle comprised between zero and five degrees with respect to the equatorial plane (EP) of the example tire 300.

The carcass 316 has two inextensible annular beads 320, an inner radial ply 322, an outer radial ply 324, and a pair of sidewall portions 326, each reinforced with an inner wedge insert 330 and an outer wedge insert 332. The inner wedge insert 330 and the outer wedge insert 332 give the example tire 300 a limited runflat capability. These wedge inserts 330, 332 increase the overall thickness of the sidewall portions 326 while functioning to support the load when the example runflat tire 300 is operated in an uninflated state.

The example runflat tire 300 provides reasonable vehicle handling and performance in normal inflated operation and reasonable tire life and vehicle handling in runflat operation. The example runflat tire 300 generally weighs more than an equivalent non-runflat tire because of the additional weight of the reinforcement material in the sidewall portions 326.

It should be apparent that the example runflat tire designs 10, 50, 300 are merely representative of a wide range of runflat tire designs that are generally characterized by sidewall stiffening devices comprising at least one insert placed in each sidewall among at least one ply of a radial ply structure. It should be further understood that the sidewall stiffening devices may also include other elements, for example, such as fabric strips, wavy cords or fibers.

In accordance with the present invention, a carcass reinforcing ply for a runflat tire, such as the plies 30, 32, 70, 322, 324 of the example tires 10, 50, 300, includes a high twist polyester cord of the construction 2200 dtex/2 8.5/8.5 tpi. The carcass reinforcing ply will generally have between 16 and 28 ends per inch (epi), alternately between 20 and 24 epi. This high twist polyester construction demonstrates improved tenacity, modulus, and fatigue properties over conventional polyester constructions. Further, this unique high twist polyester construction provides an improved alternative to the currently used rayon carcass ply constructions because the polyester construction evidences equivalent functional properties at a lower cost and rolling resistance compared to rayon.

The high twist polyester construction improves runflat mileage and durability while maintaining the tenacity and modulus benefits of such high linear density constructions. However, in order to facilitate high temperature interfacial strength (i.e., between the surface of the polyester cord and an adhesive or elastomer), the surface reactivity of the polyester filaments may be increased. For example, to achieve this, a high epoxy content spin finish/coating may be used as a thermal barrier to degradation. Alternatively, the polyester filaments may be dipped in an adhesive with a high epoxy content. Below are two tables comparing an exemplary 8/8 polyester construction with two other polyester constructions. The high twist polyester cord of the construction 2200 dtex/2 8.5/8.5 tpi, in accordance with the present invention, has shown to have improved fatigue properties even over the exemplary 8/8 twist cord of the below tables.

The direction of twist refers to the direction of slope of the spirals of a yarn or cord when it is held vertically. If the slope of the spirals conform in direction to the slope of the letter "S", then the twist is called "S" or "left hand". If the slope of the spirals conform in direction to the slope of the letter "Z", then the twist is called "Z" or "right hand". An "S" or "left hand" twist direction is understood to be an opposite direction from a "Z" or "right hand" twist.

"Yarn twist" is understood to mean the twist imparted to a yarn before the yarn is incorporated into a cord, and "cord twist" is understood to mean the twist imparted to two or more yarns when they are twisted together with one another to form a cord. "Dtex" is understood to mean the weight in grams of 10,000 meters of a yarn before the yarn has a twist imparted thereto.

Preferably, the direction of twist of the yarns of the cord of the present invention is different from the direction of twist of the cord, i.e. the yarn twist direction may be "Z" and the cord twist "S", or vice versa.

**Table 1**

| **Material** | **PET** | **PET** | **PET** |
|---|---|---|---|
| Dtex | 2200 | 2200 | 2200 |
| Construction | 2 | 2 | 2 |
| Twist Z | 4.5 | 6 | 8 |
| Twist S | 4.5 | 6 | 8 |

| **Fatigue test #1:** | | | |
|---|---|---|---|
| Brk. Strength Original (N) | 266.3 | 309.3 | 283.7 |
| Brk. Strength After 8h (N) | 151.9 | 163.4 | 207.6 |
| Brk. Strength Retained (%) | 57.0 | 52.8 | 73.2 |

| **Fatigue test #2:** | | | |
|---|---|---|---|
| Brk. Strength Original (N) | 306.3 | 305.4 | 290.6 |
| Brk. Strength After 8h (N) | 0 | 107.4 | 271.8 |
| Brk. Strength After 24h (N) | 0 | 0 | 255.3 |
| Brk. Strength Retained (%) | 0 | 35.2 | 93.5 |
| Brk. Strength Retained (%) | 0 | 0 | 87.9 |

**Table 2**

| **Material** | **PET** | **PET** | **PET** |
|---|---|---|---|
| Dtex | 2200 | 2200 | 2200 |
| Construction | 2 | 2 | 2 |
| Twist Z | 4.5 | 6 | 8 |
| Twist S | 4.5 | 6 | 8 |
| | | | |
| Breaking Strength (N) | 311.1 1 | 301.7 | 277.4 |
| Elongation at break (%) | 15.4 | 15.6 | 15.6 |
| Lase @ 5% (N) | 93.1 | 88.3 | 80.5 |
| Work of Rupture (Nm) | 6.1 | 5.9 | 5.3 |
| Dry Tenacity (cN/Tex) | 58 | 55 | 49 |
| Total Shrinkage (%) | 1.1 | 1.3 | 1.6 |
| Permanent Shrink. (%) | 1.1 | 1.1 | 1.3 |
| Linear Density cond. (dTex) | 5346.1 | 5473.1 | 5698.7 |
| Linear Density dry (dTex) | 5322.4 | 5448.1 | 5671.5 |
| Gauge | 0.740 | 0.790 | 0.800 |
| | | | |
| Cable Twist Direction | S | S | S |
| Cable Twist (Tpi) | 4.49 | 587 | 7.87 |
| Ply Twist Direction | Z | Z | Z |
| Ply Twist (Tpi) | 4.50 | 6.12 | 8.78 |

The carcass reinforcing ply for a runflat tire, such as the plies 30, 32, 70, 322, 324 of the example tires 10, 50, 300, is typically a multiple cord-reinforced component where the cords are embedded in a rubber composition which is usually referred to as a ply coat. The ply coat rubber composition is conventionally applied by calendering the rubber onto the multiplicity of cords as they pass over, around, and through relatively large, heated, rotating, metal cylindrical rolls. Such ply components of a tire, as well as the calendering method of applying the rubber composition ply coat, are well known to those having skill in such art.

Cords of various compositions may be used for a carcass ply, such as, for example, polyester, rayon, aramid and nylon. In particular, polyester cords are beneficial for use in runflat tires because of their good properties, such as improved rolling resistance, and relatively low cost. Further, treatment of polyester cords subsequent to twisting of the polyester yarns into cord provides for improved adhesion between the polyester and ply coat in a runflat tire.

The treatment of the polyester cord comprises treating the cord after twist of the yarn with an aqueous emulsion comprising a polyepoxide, followed by treating the cord with an aqueous RFL emulsion comprising a resorcinol-formaldehyde resin, a styrene-butadiene copolymer latex, a vinylpyridine-styrene-butadiene terpolymer latex, and a blocked isocyanate.

A polyester cord used in a carcass ply may be made from any polyester fiber suitable for use in a tire as is known in the art. Polyester cord yarns are typically produced as multi-filament bundles by extrusion of the filaments from a polymer melt. Polyester cord is produced by drawing polyester fiber into yarns comprising a plurality of the fibers, followed by twisting a plurality of these yarns into a cord. Such yarns may be treated with a spin-finish to protect the filaments from fretting against each other and against machine equipment to ensure good mechanical properties. The yarn may be top-coated with a so-called adhesion activator prior to twisting the yarn into cord. The polyester may also be treated with an RFL (Resorcinol-Formaldehyde-Latex) dip after twisting the yarn into cord. The adhesion activator, typically comprising a polyepoxide, serves to improve adhesion of the polyester cord to rubber compounds after it is dipped with an RFL dip. Such dips are not robust against long and high temperature cures in compounds that contain traces of humidity and amines which attack the cord filament skin and degrade the adhesive/cord interface. The typical sign of failure is a nude polyester cord showing only traces of adhesive left on it.

The polyepoxide may also be added after the polyester yarns are twisted into cords. The twisted cords are dipped in an aqueous dispersion of a polyepoxide, also referred to herein as an epoxy or epoxy compound. The polyester cord may be formed from yarns that have been treated with sizing or adhesives prior to twist. Thus, cords made using the adhesive activated yarns (i.e., yarns treated with adhesive prior to twist) may be subsequently treated as well.

As a polyepoxide, use may be made of reaction products between an aliphatic polyalcohol, such as glycerine, propylene glycol, ethylene glycol, hexane triol, sorbitol, trimethylol propane, 3-methylpentanetriol, poly(ethylene glycol), poly(propylene glycol), etc. and a halohydrine, such as epichlorohydrin, reaction products between an aromatic polyalcohol such as resorcinol, phenol, hydroquinoline, phloroglucinol bis(4-hydroxyphenyl)methane and a halohydrin, reaction products between a novolac type phenolic resin such as a novolac type phenolic resin, or a novolac type resorcinol resin and halohydrin. The polyepoxide may be derived from an ortho-cresol formaldehyde novolac resin.

The polyepoxide may be used as an aqueous dispersion of a fine particle polyepoxide. The polyepoxide may be present in the aqueous dispersion in a concentration range of from 1 to 5 percent by weight. Alternatively, the polyepoxide may be present in the aqueous dispersion in a concentration range of from 1 to 3 percent by weight.

In a first treatment step, dry polyester cord may dipped in the aqueous polyepoxide dispersion. The cord may dipped for a time sufficient to allow a dip pick up, or DPU, of between 0.3 and 0.7 percent by weight of polyepoxide. Alternatively, the DPU is between 0.4 and 0.6 percent by weight. The DPU is defined as the dipped cord weight (after drying or curing of the dipped cord) minus the undipped cord weight, then divided by the undipped cord weight.

The polyester cord may be treated in the aqueous polyepoxide dispersion in a continuous process by drawing the cord through a dispersion bath, or by soaking the cord in batch. After dipping in the polyepoxide dispersion, the cord is dried or cured to remove the excess water, using methods as are known in the art.

In a second treatment step, the polyepoxide treated polyester cord may dipped in a modified RFL liquid. The adhesive composition may comprise resorcinol, formaldehyde and a styrene-butadiene rubber latex, a vinylpyridine-styrene-butadiene terpolymer latex, and a blocked isocyanate. The resorcinol reacts with formaldehyde to produce a resorcinol-formaldehyde reaction product. This reaction product may be the result of a condensation reaction between a phenol group on the resorcinol and the aldehyde group on the formaldehyde. Resorcinol resoles and resorcinol-phenol resoles, whether formed in situ within the latex or formed separately in aqueous solution, may be considerably superior to other condensation products in the adhesive mixture.

The resorcinol may be dissolved in water to which around 37 percent formaldehyde has been added together with a strong base such as sodium hydroxide. The strong base should generally constitute around 7.5 percent or less of the resorcinol, and the molar ratio of the formaldehyde to resorcinol should be in a range of from 1.5 to 2. The aqueous solution of the resole or condensation product or resin may be mixed with the styrene-butadiene latex and vinylpyridine-styrene-butadiene terpolymer latex. The resole or other mentioned condensation product or materials that form said condensation product should constitute from 5 to 40 parts and preferably around 10 to 28 parts by solids of the latex mixture. The condensation product forming the resole or resole type resin forming materials should preferably be partially reacted or reacted so as to be only partially soluble in water. Sufficient water is then preferably added to give around 12 percent to 18 percent by weight overall solids in the final dip. The weight ratio of the polymeric solids from the latex to the resorcinol/formaldehyde resin should be in a range of 2 to 6.

The RFL adhesive may also include a blocked isocyanate. 1 to 8 parts by weight of solids of blocked isocyanate may be added to the adhesive. The blocked isocyanate may be any suitable blocked isocyanate known to be used in RFL adhesive dips, including but not limited to caprolactam blocked methylene-bis-(4-phenylisocyanate), such as Grilbond-IL6 available from EMS American Grilon, Inc., and phenol formaldehyde blocked isocyanates.

As a blocked isocyanate, use may be made of reaction products between one or more isocyanates and one or more kinds of isocyanate blocking agents. The isocyanates may include monoisocyanates, such as phenyl isocyanate, dichlorophenyl isocyanate and naphthalene monoisocyanate, diisocyanate such as tolylene diisocyanate, dianisidine diisocyanate, hexamethylene diisocyanate, m-phenylene diisocyanate, tetramethylene diisocyante, alkylbenzene diisocyanate, m-xylene diisocyanate, cyclohexylmethane diisocyanate, 3,3-dimethoxyphenylmethane-4,4'-diisocyanate, 1-alkoxybenzene-2,4-diisocyanate, ethylene diisocyanate, propylene diisocyanate, cyclohexylene-1,2-diisocyanate, diphenylene diisocyanate, butylene-1,2-diisocyanate, diphenylmethane-4,4diisocyanate, diphenylethane diisocyanate, 1,5-naphthalene diisocyanate, etc., and triisocyanates such as triphenylmethane triisocyanate, diphenylmethane triisocyanate, etc.

The isocyanate-blocking agents may include phenols, cresol, resorcinol, tertiary alcohols, such as t-butanol and t-pentanol, aromatic amines, such as diphenylamine, diphenylnaphthylamine and xylidine, ethyleneimines, such as ethylene imine and propyleneimine, imides, such as succinic acid imide, and phthalimide, lactams such as butyrolactam, ureas, such as urea and diethylene urea, oximes, such as acetoxime, cyclohexanoxime, benzophenon oxime, and .alpha.-pyrolidon.

Polymers may be added in the form of a latex or otherwise. A vinylpyridine-styrene-butadiene terpolymer latex and styrene-butadiene rubber latex may be added to the RFL adhesive. The vinylpyridiene-styrene-butadiene terpolymer may be present in the RFL adhesive such that the solids weight of the vinylpyridiene-styrene-butadiene terpolymer is from about 50 percent to about 100 percent of the solids weight of the styrene-butadiene rubber; in other words, the weight ratio of vinylpyridiene-styrene-butadiene terpolymer to styrene-butadiene rubber may be from 1 to 2.

The polymer latex is typically prepared and then the partially condensed condensation product is added. However, the ingredients (the resorcinol and formaldehyde) may be added to the polymer latex in the uncondensed form and the entire condensation may then take place in situ. The latex tends to keep longer and be more stable if it is kept at an alkaline pH level.

The polyepoxide treated cord may be dipped for one to three seconds in the RFL dip and dried at a temperature within the range of 120 degrees C. to 265 degrees C for 0.5 to 4.0 minutes, and thereafter calendered into the rubber and cured therewith. The drying step utilized is typically carried out by passing the cord through 2 or more drying ovens which are maintained at progressively higher temperatures. For instance, the cord may be passed through a first drying oven which is maintained at a temperature of 250 degrees F (121 degrees C) to 300 degrees F (149 degrees C) and then passed through a second oven which is maintained at a temperature which is within the range of 350 degrees F (177 degrees C) to 500 degrees F (260 degrees C).

It should be appreciated that these temperatures are oven temperatures rather than the temperature of the cord being dried. The cord will preferably have a total residence time in the drying ovens within the range of 1 minute to 5 minutes. For example, a residence time of 30 seconds to 90 seconds in the first oven and 30 seconds to 90 seconds in the second oven may be employed.

After treatment of the polyester cord in the polyepoxide and RFL, the treated cord is incorporated into a ply layer with a rubber ply coat compound. Conventional compounding ingredients may be used in the preparation of the ply coat rubber composition. The ply coat, in the finished tire may be sulfur cured as a component of the tire. For example, the sulfur cured ply coat rubber composition may contain conventional additives, including reinforcing agents, fillers, peptizing agents, pigments, stearic acids, accelerators, sulfur-vulcanizing agents, antiozonants, antioxidants, processing oils, activators, initiators, plasticizers, waxes, pre-vulcanization inhibitors, extender oils, etc. Representative of conventional accelerators may be, for example, amines, guanidines, thioureas, thiols, thiurams, sulfenamides, dithiocarbamates and xanthates, which are typically added in amounts of from 0.2 to 3.0 phr. Representative of sulfur-vulcanizing agents include element sulfur (free sulfur) or sulfur donating vulcanizing agents, for example, an amine disulfide, polymeric polysulfide or sulfur olefin adducts. The amount of sulfur-vulcanizing agent will vary depending on the type of rubber and particular type of sulfur-vulcanizing agent but generally range from 0.1 phr to 3 phr with a range of from 0.5 phr to 2 phr being preferred.

Representative of the antidegradants which may be in the rubber composition include monophenols, bisphenols, thiobisphenols, polyphenols, hydroquinone derivatives, phosphites, phosphate blends, thioesters, naphthylamines, diphenol amines as well as other diaryl amine derivatives, para-phenylene diamines, quinolines and blended amines. Antidegradants are generally used in an amount ranging from 0.1 phr to 10.0 phr, with a range of from 2 to 6 phr being preferred. Amine based antidegradants, however, are not preferred.

Representative of a peptizing agent that may be used is pentachlorophenol which may be used in an amount ranging from 0.1 phr to 0.4 phr, with a range of from 0.2 to 0.3 phr being preferred. Representative of processing oils which may be used in the rubber composition include aliphatic, naphthenic, and aromatic oils. The processing oils may be used in a conventional amount ranging from 0 to 30 phr, with a range of from 5 to 15 phr being preferred.

Initiators are generally used in a conventional amount ranging from 1 to 4 phr, with a range of from 2 to 3 phr being preferred. Accelerators may be used in a conventional amount. In cases where only a primary accelerator is used, the amounts may range from 0.5 to 2.0 phr. In cases where combinations of two or more accelerators are used, the primary accelerator may generally be used in amounts ranging from 0.5 to 1.5 phr and a secondary accelerator may be used in amounts ranging from 0.1 to 0.5 phr.

Suitable types of conventional accelerators are amines, disulfides, guanidines, thioureas, thiazoles, thiurams, sulfenamides, dithiocarbamates and xanthates. Preferably, the primary accelerator is a sulfenamide. If a secondary accelerator is used, it is preferably a guanidine, dithiocarbamate or thiuram compound.

## Claims

1. A pneumatic radial runflat tire (10) comprising a pair of parallel annular beads (20a, 20b), a carcass ply structure (22), a belt reinforcement structure (14) disposed radially outward of the carcass ply structure (22) in a crown area of the tire (10), a tread (12) disposed radially outward of the belt reinforcement structure (14), and a pair of sidewalls (16, 18) comprising a part of the carcass ply structure (22), wherein the carcass ply structure comprises a polyester fabric (30, 32) with a cord comprising a first yarn and a second yarn, **characterised in that** the first yarn having a weight in a range of from 2100 to 2300 dtex and a twist in a range of from 8.2 tpi to 8.8 tpi, the second yarn having a weight in a range of from 2100 to 2300 dtex and a twist in a range of from 8.2 tpi to 8.8 tpi, and the cord having a twist in a range of 8.2 to 8.8 tpi and a cord density of between 16 and 28 epi.

2. The pneumatic tire of claim 1 wherein the first yarn has a weight in a range of from 2150 to 2250 dtex and a twist in a range of from 8.3 tpi to 8.8 tpi, the second yarn has a weight in a range of from 2150 to 2250 dtex and a twist in a range of from 8.3 tpi to 8.8 tpi, and the cord has a twist in a range of 8.3 to 8.8 tpi and a cord density of between 16 and 28 epi.

3. The pneumatic tire of claim 1 or 2 wherein the twist of the first yarn and the twist of the second yarn is the same.

4. The pneumatic tire of at least one of the previous claims wherein the cord has the cord construction 2200 dtex/2 8.5 tpi/8.5 tpi.

5. The pneumatic tire of at least one of the previous claims wherein the cords of the polyester fabric (30, 32) are treated, after twist, with an aqueous emulsion comprising a polyepoxide and, subsequently, with an aqueous RFL emulsion.

6. The pneumatic tire of at least one of the previous claims wherein the yarns of the cord are top-coated with an adhesion activator prior to twisting the yarns into the cord.

7. The pneumatic tire of at least one of the previous claims wherein the carcass ply structure (22) comprises a first polyester fabric ply (30) and a second polyester fabric ply (32).

8. The pneumatic tire of at least one of the previous claims further comprising a fabric overlay (28) deployed between a bottom portion of the tread (12) and an upper part of the belt reinforcement structure(14), or wherein a fabric overlay (28) is disposed radially inward of the tread (12) and radially outward from the belt reinforcement structure (14).

9. The pneumatic tire of claim 8 wherein the fabric overlay (28) comprises a helically wound ribbon laid at an inclination angle between zero and five degrees with respect to an equatorial plane (EP) of the pneumatic tire (10).

10. The pneumatic tire of at least one of the previous claims further comprising a gas-impervious inner liner (34), a pair of bead filler apexes (38a, 38b), a first pair of sidewall wedge inserts (40a, 40b), and a second pair of sidewall wedge inserts (42a, 42b), wherein the first wedge inserts (40a, 40b) are preferably located between the inner liner (34) and the first fabric (30) and the second wedge inserts (42a, 42b) are preferably located between the first fabric ply (30) and the second fabric ply (32).

11. The pneumatic tire of claim 1 wherein the carcass (22) ply structure consists of a single polyester fabric ply.

12. The pneumatic tire of at least one of the previous claims further including sidewall stiffening means of at least one insert placed in each sidewall.

13. The pneumatic tire of claim 12 wherein the sidewall stiffening means include a fabric strip.

14. The pneumatic tire of claim 12 wherein the sidewall stiffening means include a wavy cord.

15. The pneumatic tire of claim 12 wherein the sidewall stiffening means include a fiber.

## Patentansprüche

1. Radial-Luftreifen (10) mit Notlaufeigenschaften, umfassend ein Paar parallele ringförmige Wülste (20a, 20b), eine Karkassenlagenstruktur (22), eine Gürtelverstärkungsstruktur (14), die radial auswärts von der Karkassenlagenstruktur (22) in einem Zenitbereich des Reifens (10) angeordnet ist, eine Lauffläche (12), die radial auswärts von der Gürtelverstärkungsstruktur (14) angeordnet ist, und ein Paar Seitenwände (16, 18), die einen Teil der Karkassenlagenstruktur (22) umfassen, wobei die Karkassenlagenstruktur ein Polyestergewebe (30, 32) umfasst, mit einem Kord, der ein erstes Garn und ein zweites Garn umfasst, **dadurch gekennzeichnet, dass** das erste Garn ein Gewicht in einem Bereich von 2100 bis 2300 dtex und eine Verdrillung in einem Bereich von 8,2 TPI bis 8,8 TPI aufweist, wobei das zweite Garn ein Gewicht in einem Bereich von 2100 bis 2300 dtex und eine Verdrillung in einem Bereich von 8,2 TPI bis 8,8 TPI aufweist und der Kord eine Verdrillung in einem Bereich von 8,2 bis 8,8 TPI und eine Korddichte zwischen 16 und 28 EPI aufweist.

2. Luftreifen nach Anspruch 1, wobei das erste Garn ein Gewicht in einem Bereich von 2150 bis 2250 dtex und eine Verdrillung in einem Bereich von 8,3 TPI bis 8,8 TPI aufweist, das zweite Garn ein Gewicht in einem Bereich von 2150 bis 2250 dtex und eine Verdrillung in einem Bereich von 8,3 TPI bis 8,8 TPI aufweist und der Kord eine Verdrillung in einem Bereich von 8,3 bis 8,8 TPI und eine Korddichte zwischen 16 und 28 EPI aufweist.

3. Luftreifen nach Anspruch 1 oder 2, wobei die Verdrillung des ersten Garns und die Verdrillung des zweiten Garns die gleiche ist.

4. Luftreifen nach mindestens einem der vorgenannten Ansprüche, wobei der Kord die Kordkonstruktion 2200 dtex/2 8,5 TPI/8,5 TPI aufweist.

5. Luftreifen nach mindestens einem der vorgenannten Ansprüche, wobei die Korde des Polyestergewebes (30, 32) nach dem Verdrillen mit einer wässrigen Emulsion, die ein Polyepoxid enthält, und anschließend mit einer wässrigen RFL-Emulsion behandelt sind.

6. Luftreifen nach mindestens einem der vorgenannten Ansprüche, wobei die Garne des Kords vor dem Verdrillen der Garne zu dem Kord mit einem Haftaktivator oberflächenbeschichtet sind.

7. Luftreifen nach mindestens einem der vorgenannten Ansprüche, wobei die Karkassenlagenstruktur (22) eine erste Polyestergewebelage (30) und eine zweite Polyestergewebelage (32) umfasst.

8. Luftreifen nach mindestens einem der vorgenannten Ansprüche, weiter eine zwischen einem unteren Teil der Lauffläche (12) und einem oberen Teil der Gürtelverstärkungsstruktur (14) eingesetzte Gewebeüberdeckung (28) umfassend, oder wobei eine Gewebeüberdeckung (28) radial einwärts von der Lauffläche (12) und radial auswärts von der Gürtelverstärkungsstruktur (14) angeordnet ist.

9. Luftreifen nach Anspruch 8, wobei die Gewebeüberdeckung (28) ein schraubenförmig gewickeltes Band umfasst, das in einem Neigungswinkel zwischen null und fünf Grad bezüglich einer Äquatorebene (EP) des Luftreifens (10) verlegt ist.

10. Luftreifen nach mindestens einem der vorgenannten Ansprüche, weiter eine gasundurchlässige Innenisolierung (34), ein Paar Wulstkernreiterfahnen (38a, 38b), ein erstes Paar Seitenwand-Keileinsätze (40a, 40b) und ein zweites Paar Seitenwand-Keileinsätze (42a, 42b) umfassend, wobei die ersten Keileinsätze (40a, 40b) sich bevorzugt zwischen der Innenisolierung (34) und dem ersten Gewebe (30) befinden und die zweiten Keileinsätze (42a, 42b) sich bevorzugt zwischen der ersten Gewebelage (30) und der zweiten Gewebelage (32) befinden.

11. Luftreifen nach Anspruch 1, wobei die Karkassenlagenstruktur (22) aus einer einzigen Polyestergewebelage besteht.

12. Luftreifen nach mindestens einem der vorgenannten Ansprüche, weiter Seitenwandversteifungsmittel aus mindestens einem in jeder Seitenwand angebrachten Einsatz beinhaltend.

13. Luftreifen nach Anspruch 12, wobei die Seitenwandversteifungsmittel einen Gewebestreifen beinhalten.

14. Luftreifen nach Anspruch 12, wobei die Seitenwandversteifungsmittel einen wellenförmigen Kord beinhalten.

15. Luftreifen nach Anspruch 12, wobei die Seitenwandversteifungsmittel eine Faser beinhalten.

## Revendications

1. Bandage pneumatique à nappe radiale permettant de rouler à plat (10) comprenant une paire de talons annulaires parallèles (20a, 20b), une structure de nappe de carcasse (22), une structure de renforcement de ceintures (14) disposée en direction radiale à l'extérieur de la structure de nappe de carcasse (22) dans la zone de sommet du bandage pneumatique (10), une bande de roulement (12) disposée en direction radiale à l'extérieur de la structure de renforcement de ceintures (14), et une paire de flancs (16, 18) comprenant une partie de la structure de nappe de carcasse (22), la structure de nappe de carcasse comprenant un tissu en polyester (30, 32) muni d'un câblé comprenant un premier fil et un deuxième fil, **caractérisé en ce que** le premier fil possède un poids dans la plage de 2100 à 2300 dtex et une torsion dans la plage de 8,2 tpi à 8,8 tpi, le deuxième fil possède un poids dans la plage de 2100 à 2300 dtex et une torsion dans la plage de 8,2 tpi à 8,8 tpi, et le câblé possède une torsion dans la plage de 8,2 tpi à 8,8 tpi et une densité de câblés entre 16 et 28 epi.

2. Bandage pneumatique selon la revendication 1, dans lequel le premier fil possède un poids dans la plage de 2150 à 2250 dtex et une torsion dans la plage de 8,3 tpi à 8,8 tpi, le deuxième fil possède un poids dans la plage de 2150 à 2250 dtex et une torsion dans la plage de 8,3 tpi à 8,8 tpi, et le câblé possède une torsion dans la plage de 8,3 tpi à 8,8 tpi et une densité de câblés entre 16 et 28 epi.

3. Bandage pneumatique selon la revendication 1 ou 2, dans lequel la torsion du premier lieu et la torsion du deuxième fil sont identiques.

4. Bandage pneumatique selon au moins une des revendications précédentes, dans lequel le câblé possède une structure de câblé de 2200 dtex/2 8,5 tpi/8,5 tpi.

5. Bandage pneumatique selon au moins une des revendications précédentes, dans lequel les câblés du tissu en polyester (30, 32) sont traités, après la torsion, avec une émulsion aqueuse comprenant un polyépoxyde et par la suite avec une émulsion RFL aqueuse.

6. Bandage pneumatique selon au moins une des revendications précédentes, dans lequel les fils du câblé sont munis d'une couche de finition avec un activateur des adhésions avant la torsion des fils pour obtenir le câblé.

7. Bandage pneumatique selon au moins une des revendications précédentes, dans lequel la structure de nappe de carcasse (22) comprend une première nappe de tissu en polyester (30) et une deuxième nappe de tissu en polyester (32).

8. Bandage pneumatique selon au moins une des revendications précédentes, comprenant en outre un revêtement en tissu (28) déployé entre une portion inférieure de la bande de roulement (12) et une portion supérieure de la structure de renforcement de ceintures (14), ou dans lequel un revêtement en tissu (28) vient se disposer en direction radiale à l'intérieur de la bande de roulement (12) et en direction radiale à l'extérieur de la structure de renforcement de ceintures (14).

9. Bandage pneumatique selon la revendication 8, dans lequel le revêtement en tissu (28) comprend un ruban à enroulement hélicoïdale posé en formant un angle d'inclinaison entre 0 et 5° par rapport au plan équatorial (EP) du bandage pneumatique (10).

10. Bandage pneumatique selon au moins une des revendications précédentes, comprenant en outre un calandrage intérieur (34) imperméable aux gaz, une paire de bourrages sur tringle (38a, 38b), une première paire d'inserts cunéiformes de flancs (40a, 40b) et deuxième une première paire d'inserts cunéiformes de flancs (42a, 42b), la première paire d'inserts cunéiformes de flancs (40a, 40b) étant de préférence disposée entre le calandrage intérieur (34) et le premier tissu (30) et la deuxième paire d'inserts cunéiformes de flancs (42a, 42b) étant de préférence disposée entre la première nappe de tissu (30) et la deuxième nappe de tissu (32).

11. Bandage pneumatique selon la revendication 1, dans lequel la structure de nappe de carcasse (22) est constituée d'une seule nappe de tissu en polyester.

12. Bandage pneumatique selon au moins une des revendications précédentes, englobant en outre des moyens de renforcement de flanc d'au moins un insert placé dans chaque flanc.

13. Bandage pneumatique selon la revendication 12, dans lequel les moyens de renforcement des flancs englobent une bande de tissus.

14. Bandage pneumatique selon la revendication 12, dans lequel les moyens de renforcement des flancs englobent un câblé ondulé.

15. Bandage pneumatique selon la revendication 12, dans lequel les moyens de renforcement des flancs englobent une fibre.
